# EUROPEAN PATENT APPLICATION

(11) **EP 2 687 277 A1**
(43) Date of publication of application: **22.01.2014**
(21) Application number: 12305872.9
(22) Date of filing: 19.07.2012
(51) Int. Cl.: A63F 13/12

(54) **Method of managing gaming assets**

(71) Applicant: Gemalto SA, 92190 Meudon (FR)
(72) Inventor: Martinent, Jean-François, 13705 LA CIOTAT (FR); Huysmans, Guillaume, 13705 LA CIOTAT (FR)

(57) **Abstract**

The invention is a method for managing gaming assets. A playing device comprises an authentication data which is unique to said playing device. A player device is allocated to a player. The method comprises the step of: authenticating said authentication data and in case of success, generating a physical asset signature reflecting the allocation of said playing device to said player device and storing said physical asset signature in said player device.

## Description

### (Field of the invention)

The present invention relates to methods of managing gaming assets. It relates particularly to methods of checking the genuineness of physical electronic gaming devices and of digital gaming data and to methods of managing the property of assets related to a game.

### (Background of the invention)

In the domain of electronic games, two kinds of gaming assets may be used by players: physical electronic gaming devices and digital gaming data (also named virtual gaming data). Physical electronic gaming devices comprise at least a memory feature. They also may comprise computing features. These gaming devices may be implemented through a wide variety of form factors, like figurines, consoles or playing cards. The digital gaming data is a kind of gaming assets which may evolve during a game. For instance, a player may gain a new advantage or bonus which is stored as an enhanced gaming data into a physical device.

In order to fight against counterfeit devices, the game editors need to control the genuineness of the physical electronic gaming devices which are used by players. At the same time, the game editors need to control the genuineness of the digital gaming data in order to check that there is no undue digital right granted to players.

There is a need for enhancing the control of gaming assets which are deployed on the field.

### (Summary of the Invention)

An object of the invention is to solve the above mentioned technical problem.

The object of the present invention is a method for managing assets related to a game. A first playing device comprises a first authentication data which is unique to said first playing device. A first player device is allocated to a first player and a second player device is allocated to a second player. The method comprises the step of authenticating said first authentication data and in case of success, generating a first physical asset signature reflecting the allocation of said first playing device to said first player device and storing said first physical asset signature in said first player device.

Furthermore, the method may comprise the further steps:
- authenticating said first physical asset signature and in case of success:
- generating a second physical asset signature reflecting the allocation of said first playing device to said second player device,
- storing said second physical asset signature in said second player device, and
- updating said first physical asset signature in said first player device.

Furthermore, the game may be issued by an editor and the method may comprise the further steps:
- playing the game, generating a game record associated to said first player device and storing the game record in said first player device,
- validating the game record by using a server representing the editor and in case of success, generating a first player experience associated to said first player device from the game record, generating a first virtual player asset signature from said first player experience and storing said first player experience and said first virtual player asset signature in said first player device.

Advantageously, the method may comprise the further steps:
- authenticating said first virtual player asset signature and in case of success:
- transferring said first player experience to said second player device by generating a second virtual player asset signature from said first player experience,
- storing said first player experience and said second virtual player asset signature in said second player device, and
- updating said first virtual player asset signature in said first player device.

Furthermore, the game may be issued by an editor and the method may comprise the further steps:
- playing with said first playing device, generating a game log associated to said first playing device and storing the game log in said first player device,
- validating the game log by using a server representing the editor and in case of success:
- generating a gaming experience associated to said first playing device from the game log,
- generating a first virtual device asset signature from the gaming experience, and
- storing the gaming experience and said first virtual device asset signature in said first player device.

Advantageously, a second playing device may comprise a second authentication data which is unique to said second playing device. Said second player device may comprise a second physical asset signature reflecting the allocation of said second playing device to said second player device. The method may comprise the further steps:
- authenticating said second physical asset signature and said first virtual device asset signature and in case of success, allocating the gaming experience to said second playing device by:
- generating a second virtual device asset signature from the gaming experience,
- storing the gaming experience and said second virtual device asset signature in said second player device,
- updating said first virtual device asset signature in said first player device.

Advantageously, the method may comprise the further steps:
- authenticating said first physical asset signature and said first virtual device asset signature and in case of success, allocating said first playing device and the gaming experience to said second player device by:
- generating a second virtual device asset signature from the gaming experience,
- storing the gaming experience and said second virtual device asset signature in said second player device,
- generating a second physical asset signature reflecting the allocation of said first playing device to said second player device,
- storing said second physical asset signature into said second player device,
- updating said first virtual device asset signature and said first physical asset signature in said first player device.

Another object of the invention is a system for managing assets related to a game issued by an editor. The system comprises a server representing the editor. The system comprises a first playing device comprising a first authentication data which is unique to said first playing device. The said system comprises a first player device allocated to a first player, a second player device allocated to a second player. The system comprises a first authenticating means adapted to authenticate said first authentication data. The system comprises a generating means adapted to generate a first physical asset signature reflecting the allocation of said first playing device to said first player device only in case of successful authentication of said first authentication data.

Furthermore, the system may comprise a second authenticating means adapted to authenticate said first physical asset signature. The system may comprise an updating means adapted to update first physical asset signature in case of transfer of said first playing device from to said first player device to said second player device. Said first player device may comprise a recording means adapted to generate a game record associated to said first player device when playing the game and adapted to store the game record in said first player device. The system may comprise a validating means adapted to validate the game record by using a server representing the editor and in case of successful validation, to generate a first player experience associated to said first player device from the game record.

Advantageously, said first player device may comprise a logging means adapted to generate a game log associated to said first playing device when playing with said first playing device and to store the game log in said first player device. The validating means may be adapted to validate the game log by using a server representing the editor and in case of success to generate a gaming experience associated to said first playing device from the game log.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of system comprising two playing devices, two player devices, a host device and a server according to the invention,
- Figure 2 illustrates a first example of flowchart of method for managing gaming asset according to the invention;
- Figure 3 illustrates an example of flowchart of method for managing the transfer of a playing device from a player to another one according to the invention;
- Figure 4 illustrates an example of flowchart of method for transferring a player experience from a player to another one according to the invention;
- Figure 5 illustrates an example of flowchart of method for transferring the experience of a playing device to another playing device according to the invention; and
- Figure 6 illustrates an example of flowchart of method for transferring both a playing device and its experience from a player to another player according to the invention.

### (Detailed description of the preferred embodiments)

The invention applies to any kind of systems comprising at least a player device and a playing device wherein the player device is permanently assigned to a player and wherein the playing device is assigned to a player at a given time and can be assigned to another player over time.

In the following examples, the player device is a microprocessor card and the playing device is a memory card. These examples of embodiment are not restrictive. The player device may be implemented with any device having computing features and the playing device may be implemented with any device having memory features. For example, a player device may be a figurine which embeds a chip and the playing device may be a figurine which embeds a NFC (Near Field Communication) tag. In a preferred embodiment, both the player device and the playing device are able to communicate through contactless channels.

A chip card is a pocket-sized card with embedded integrated circuits. Chip cards are also named integrated circuit cards (ICC). There are two broad categories of chip cards: memory cards and microprocessor cards. Microprocessor cards contain volatile memory and microprocessor components. A microprocessor card has an operating system running on its microprocessor. Memory cards contain only nonvolatile memory storage components and optionally dedicated security logic. When connected to a host machine, a memory card is generally seen as storage device. Both microprocessor card and memory card comprise communication means allowing communicating either in contact mode or in wireless mode.

A chip card may be a contactless card. A contactless card has an antenna allowing an inductive coupling. A contactless card exchanges data with a reader through a modulated magnetic field. For example a contactless memory card may comply with the NFC technology. Usually contactless cards communicate with an application hosted by a device having a contactless reader. A microprocessor card may be a contact card plugged into a contactless device that allows to the microprocessor card through a contactless channel. For example, a microprocessor card may be a card inserted in a NFC mobile phone or any portable device providing contactless reader features like a Personal Digital Assistant (PDA), a multimedia reader and a small computer.

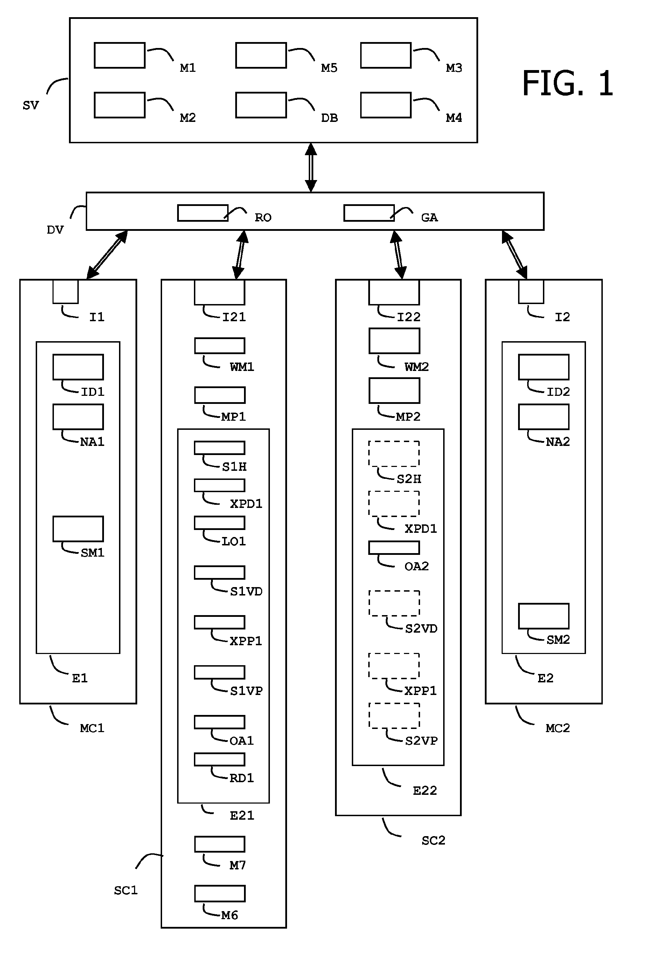

**Figure 1** shows an example of system comprising two player devices SC1 and SC2, two playing devices MC1 and MC2, a host device DV and a server SV. The four devices SC1, SC2, MC1 and MC2 are intended to communicate with the host device DV. These four devices are intended to be used for a specific game. The playing device SC1 is assumed to belong to a player P1 and the player device SC2 is assumed to belong to another player P2.

A playing device is a device used for playing the game.

The playing device MC1 comprises a contactless interface I1 and a non volatile memory E1. The memory E1 may be of flash type or EEPROM type for example. The playing device MC1 comprises an identifier ID1 and a playing name NA1. The identifier ID1 is unique to the playing device MC1. For instance, the identifier ID1 may be a serial number. The playing name NA1 is the name of the device MC1 as it appears when playing the game. For example, the playing name NA1 may be a character (like "Jef il Magnifico" or "Willy the Conqueror"), an object (like "Hammer" or "sword"), a place (like "Castle" or "Forest") or an effect (like "To disappear" or "To clone").

The playing device MC1 comprises an authentication data SM1 which allows checking the genuineness of the playing device MC1. Preferably, the authentication data SM1 has been generated during the manufacturing phase so that the playing device MC1 comprise the authentication data SM1 when it has been issued or sold. For example, the authentication data SM1 may be computed by using a RSA (Rivest Shamir Adleman) algorithm or an Elliptic curve digital signature algorithm (ECDSA). Thus a signature is generated by taking as input parameters the data to be authenticated. For instance the signature may be computed from the concatenation of the playing name NA1 and the identifier ID1.

In another example, the authentication data SM1 may be computed by using a HMAC (Hash-based message authentication code) mechanism. For instance, the authentication data SM1 may be generated by a HMAC by using the set of cryptographic functions SHA-2.

In a preferred embodiment, the playing device MC1 is a contactless memory card compliant with Mifare ® technology. Alternatively, the playing device MC1 may be a device able to communicate through any kinds of NFC technology. The playing device MC1 may also be replaced with a contactless microprocessor card.

A player device is intended to be associated to a unique player. Usually, a player device contains data representative of the player which owns the player device. The player device SC1 comprises a contactless interface 121, a working memory WM1, a microprocessor MP1 and a non volatile memory E21. The working memory WM may be a RAM. The memory E21 may comprise an ownership data OA1, a game log LO1 associated to a playing device, a physical asset signature S1H reflecting the allocation of a playing device to the player device SC1, a player experience XPP1 associated to the player device SC1, a virtual player asset signature S1VP computed from the player experience XPP1, a gaming experience XPD1 associated to a playing device, a virtual device asset signature S1VD computed from the gaming experience XPD1. The player device SC1 may be a NFC card. The ownership data OA1 reflects the fact that the playing device SC1 belongs to the player P1. For instance, the ownership data OA1 may contain the full name of the player P1. It is to be noted that the signatures S1H, S1VD and S1VP, the game log LO1, the gaming experience XPD1 and the player experience XPP1 are optional.

The player device SC1 comprises a recording means M6 adapted to generate a game record RD1 which is associated to the player device SC1 when playing the game. The recording means M6 is also adapted to store the game record RD1 in the player device SC1.

The player device SC1 comprises a logging means M7 adapted to generate a game log LO1 associated to the playing device MC1 when playing with the playing device MC1. The logging means M7 is also adapted to store the game log LO1 in the player device SC1.

Alternatively, the recording means M6 or the logging means M7 may be embedded in the host device DV instead of the player device SC1.

The host device DV is adapted to establish communication channels with the player devices SC1 and SC2, with the playing devices MC1 and MC2 and with the server SV. The host device DV comprises a routing means RO adapted to route data between the devices SC1, SC2, MC1, MC2 and the server SV. Thus a player device and a playing device may exchange data through the device DV for example. The host device DV comprises a game application GA allowing playing the game.

The host device DV may be a mobile phone, a game console, a personal computer, a tablet, a TV or any relevant machine. Advantageously, the host device DV may have a contactless reader comprising an antenna which provides energy to the player devices and playing devices. Thus when a player wants to associate a new playing device with his own player device, the player has to bring these devices near the contactless reader of the host device DV according to a preset sequence. Advantageously, the host device DV may have a screen allowing displaying instructions to the player in this goal. When a player wants to validate a gaming experience, the player has to bring the devices near the contactless reader of the host device DV according to a specific sequence. When a player wants to transfer property of digital or physical gaming assets, the player has to bring the devices near the contactless reader of the host device DV according to a particular sequence.

The server SV contains data provided by the editor of the game. The server SV is considered as representing the game editor. The server may be a remote machine which may be accessed through Internet for example.

In the example of Figure 1, the server SV comprises an authenticating means M1 adapted to authenticate the genuineness of a playing device by authenticating the authentication data embedded in the playing device. For example, the authenticating means M1 may compute a checking value thanks to data extracted from the playing device MC1 and compare the checking value with the authentication data SM1. For instance, the checking value may be computed by applying a RSA algorithm or an ECDSA.

The server SV comprises a generating means M3 adapted to generate a physical asset signature S1H reflecting the allocation of the playing device MC1 to the player device SC1 only in case the authentication data SM1 has been successfully authenticated. The generating means is also able to compute virtual device asset signatures and virtual player asset signatures.

The server SV comprises an updating means M4 adapted to update the physical asset signature S1H in case of transfer of property of the playing device MC1 from the player P1 to the player P2. In other words, the updating means M4 can update the signature S1H when the playing device MC1 is transferred from the player device SC1 to the player device SC2.

The server SV comprises a validating means M5 adapted to validate the game record RD1 and in case of successful validation, to generate a player experience XPP1 from the game record RD1. This player experience XPP1 is related to the player P1 and is associated to the player device SC1.

Advantageously, the validating means M5 is adapted to validate a game log and in case of successful validation of the game log to generate a gaming experience from the game log, said gaming experience being associated to the playing device corresponding to the game log. For instance the validating means M5 may validate the game log LO1 and generate a gaming experience XPD1 from the game log LO1. In such a case, the gaming experience XPD1 is associated to the playing device MC1.

The server SV comprises an authenticating means M2 adapted to authenticate the signatures stored into a player device. In particular, the authenticating means M2 is able to check physical asset signatures, virtual device asset signatures and virtual player asset signatures.

The server SV comprises a set DB of reference data which may be used by the authenticating means M1 and M2 when authenticating an authentication data or a signature.

Alternatively, authenticating means M1 or M2 may be embedded in the host device DV. In this case, authenticating means M1 and M2 are adapted to access the set DB of reference data that is stored in the server SV.

Advantageously, a player device may comprise a list a several playing devices belonging to the player which is the owner of the player device.

The playing device MC2 is similar to the playing device MC1.

The playing device MC2 comprises a contactless interface I2 and a non volatile memory E2. The playing device MC2 comprises an identifier ID2 and a playing name NA2. The playing device MC2 comprises an authentication data SM2 which allows checking the genuineness of the playing device MC2.

The player device SC2 is similar to the player device SC1. The player device SC2 comprises a contactless interface 122, a working memory WM2, a microprocessor MP2 and a non volatile memory E22. The memory E22 may comprise an ownership data OA2, and experiences and signatures similar to those described for the player device SC1.

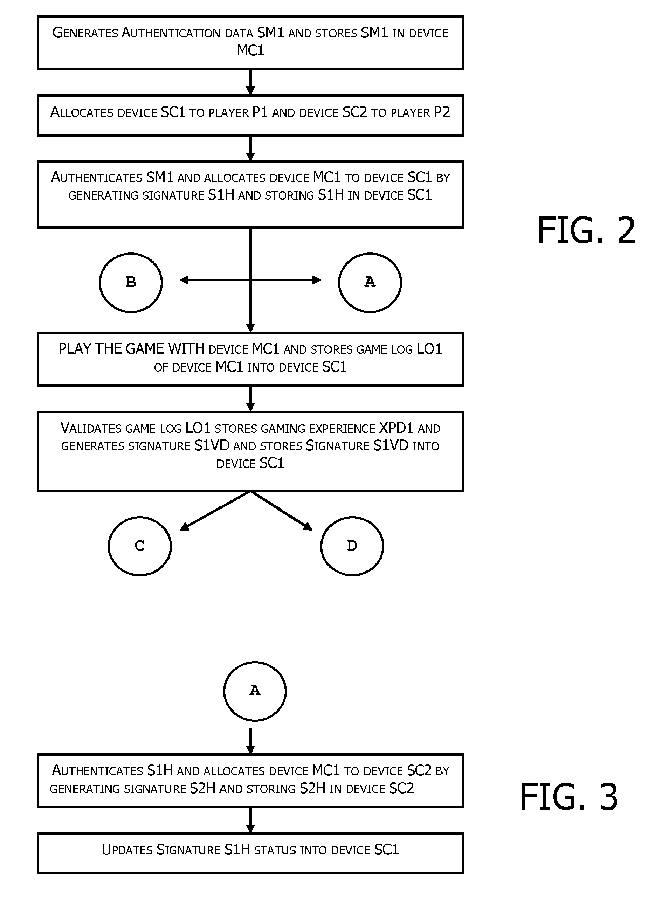

**Figure 2** shows an example of method for managing gaming assets according to the invention.

First, an authentication data SM1 is computed and stored in the playing device MC1. The mathematical function used for computing the authentication data SM1 is selected so as to have the authentication data SM1 which is unique to the playing device MC1. For instance, the authentication data SM1 may be generated by using the identifier ID1 and the playing name NA1 as input parameters.

Then the playing device MC1, and the player devices SC1 and SC2 are issued and offered for sale. The player P1 buys the player device SC1 and the playing device MC1. Another player P2 buys the player device SC2. The ownership data OA1 is written in the player device SC1 in order to allocate the player device SC1 to the player P1. Similarly an ownership data OA2 is written in the player device SC2 in order to allocate the player device SC2 to the player P2. These allocation operations may be managed by the application GA of the host device DV.

Then the genuineness of the playing device MC1 is authenticated by checking the authentication data SM1. If the playing device MC1 is successfully authenticated, a physical asset signature S1H is generated and stored in the player device SC1. The presence of the physical asset signature S1H in the player device SC1 reflects the allocation of the playing device MC1 to the player P1. The physical asset signature S1H is generated by the generating means M3. For instance, the signature S1H may be computed according to the Public Key Infrastructure (PKI) scheme by using a private key of the game editor. The signature S1H may be generated by applying a RSA algorithm or an Elliptic curve digital signature algorithm (ECDSA) to a set of data reflecting the couple "playing device MC1 / player device SC1". For instance, the signature S1H may be computed from the identifier ID1 and an identifier unique to the player device SC1. A serial number of the player device SC1 may be used. Furthermore, the signature S1H may be computed from a large number of items stored in playing device MC1 and in the player device SC1.

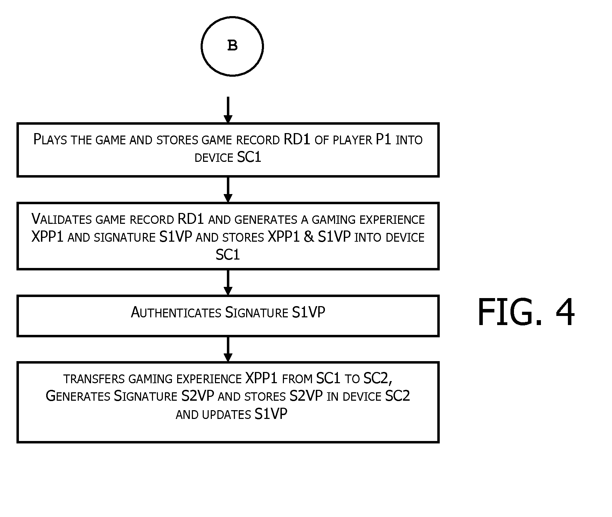

After the allocation step, the method may go on as shown at Figures 2, 3 or 4. A symbol "A" has been drawn for the connection between Figures 2 and 3. A symbol "B" has been drawn for the connection between Figures 2 and 4.

**Figure 3** is a flow chart showing a second part of a step sequence allowing the transfer of playing device from a player to another one according to the invention.

The transfer playing device MC1 may be done once players P1 and P2 agreed.

Coming from the allocation step of Figure 2 (via the connecting point "A"), the transfer is performed through two further steps.

The physical asset signature S1H is authenticated. The authentication may be performed by the authenticating means M2 thanks to the host device DV acting as an access point for the player devices SC1 and SC2. If the signature S1H is successfully authenticated, a signature physical asset S2H is generated and stored in the player device SC2. The presence of the physical asset signature S2H in the player device SC2 reflects the allocation of the playing device MC1 to the player P2.

The physical asset signature S1H (or its status) is updated and stored in the player device SC1 in order to reflect that the playing device MC1 no longer belongs to the player P1. Advantageously, these two steps are performed in atomic manner. In other words, the system ensures that either the transfer is correctly performed in both player device SC1 and SC2 or fully canceled.

**Figure 4** is a flow chart showing another part of a step sequence allowing the transfer of a player experience from a player to another one according to the invention.

The player experience transfer is assumed to be executed once players P1 and P2 agreed. This transfer can result in a payment or another exchange in return.

Coming from the allocation step of Figure 2 (via the connecting point "B"), the flow chart of Figure 4 starts by a phase where player P1 gains experience by playing the game. A game record RD1 is stored in the player device SC1 in order to track the actions of the player P1 during the game. Then the game record RD1 is checked and validated by the validating means M5 of the server SV. For example, the player device SC1 may compute a signature from the game record RD1 so that the validating means M5 is able to check this signature. Such a signature may be computed by using a RSA algorithm. Advantageously, the signature of the game record RD1 may be generated in two steps by both the player device SC1 and the player device of another player of the game. When the game record RD1 is validated, a corresponding gaming experience XPP1 associated to the player P1 is generated and stored into the player device SC1. A virtual player asset signature S1VP is computed from the player experience XPP1 (also named gaming experience XPP1). The virtual player asset signature S1VP may be generated by applying a RSA algorithm or an ECDSA to the player experience XPP1 for example. Advantageously, the virtual player asset signature S1VP may be generated from a set comprising the player experience XPP1 and an identifier unique to the player device SC1. The signature S1VP is stored into the player device SC1. The signature S1VP aims at offering a way to authenticate the gaming experience XPP1 when needed.

Then the transfer (as such) of the player experience XPP1 is started and performed through two steps.

The virtual player asset signature S1VP is authenticated. The authentication may be performed by the authenticating means M2. If the signature S1VP is successfully authenticated, a virtual player asset signature S2VP is generated and stored in the player device SC2. The virtual player asset signature S2VP may be generated thanks to a RSA algorithm applied to a set comprising the player experience XPP1 and an identifier unique to the player device SC2. Optionally, a time stamp may be allocated to the player experience XPP1 by the server SV. The player experience XPP1 is removed from the player device SC1 and stored in the player device SC2. The virtual player asset signature S2VP may be used to prove that the player experience XPP1 has been allocated to the player P2.

The transfer of the player experience XPP1 may be carried out according to an asynchronous scheme. At a first stage, a first temporary data may be computed from the signature XPP1 by the player device SC2. The first temporary data is stored in the player device SC1. The first temporary data reflects the fact that the player experience XPP1 is no more available for the player P1. In parallel a second temporary data may be computed from the signature XPP1 by the player device SC1 and stored in the player device SC2. The second temporary data reflects the fact that the player experience XPP1 is to be allocated to the player P1. The first stage may be performed without online access to the server SV. At a second stage, the server SV finalizes the transfer by using both first and second temporary data. These temporary data may be computed by using the counter signature model where the value of the generated data depends on both sides.

Furthermore, the transfer may involve only part of the player experience XPP1 as agreed between players.

After the allocation step of Figure 2, the method may go on as shown at Figure 2.

At a next step, the player P1 plays with the playing device MC1. The playing device MC1 can gain experience during the game. A game log LO1 is stored in the player device SC1 in order to track the actions related to the playing device MC1 during the game. Then the game log LO1 is checked and validated by the validating means M5 of the server SV. For example, the player device SC1 may compute a signature from the game log LO1 so that the validating means M5 is able to check this signature. Such a signature may be computed by using a RSA algorithm. Furthermore, the signature of the game log LO1 may be generated in two steps by both the player device SC1 and the player device of another player of the game. When the game log LO1 is validated, a corresponding gaming experience XPD1 associated to the playing device MC1 is generated and stored into the player device SC1. The gaming experience XPD1 may be managed through a counter or a list. It may reflect a capability level for instance. A virtual device asset signature S1VD is computed from the gaming experience XPD1. The virtual device asset signature S1VD may be generated by applying a RSA algorithm or an ECDSA to the gaming experience XPD1 for example. Advantageously, the virtual device asset signature S1VD may be generated from a set comprising the gaming experience XPD1 and an identifier unique to the playing device MC1. The signature S1VD is stored into the player device SC1 because the playing device MC1 belongs to the player P1. The signature S1VD aims at offering a way to authenticate the gaming experience XPD1 if needed.

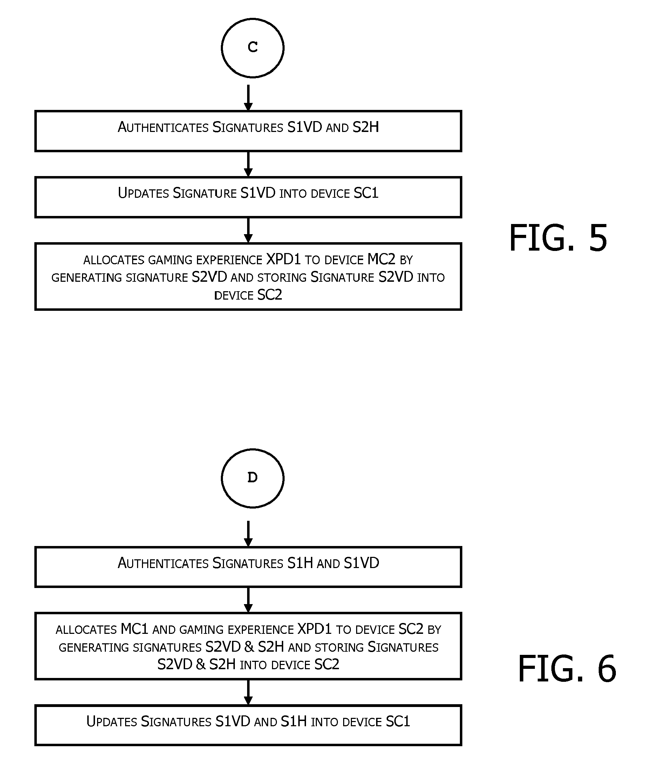

After the step of validation of the gaming experience XPD1, the method may go on as shown at Figures 5 or 6. A symbol "C" has been drawn for the connection between Figures 2 and 5. Similarly the symbol "D" depicts the connection between Figures 2 and 6.

**Figure 5** is a flow chart showing another part of a step sequence allowing the transfer of the gaming experience XPD1 associated to the playing device MC1 to the playing device MC2 according to the invention.

The player P2 is assumed to own a playing device MC2 and the player device SC2. In other words, the playing device MC2 comprises an authentication data SM2 and the player device SC2 comprises a physical asset signature S2H reflecting the ownership of the playing device MC2 to the player P2.

Coming from the validation step of Figure 2 (via the connecting point "C"), the flow chart of Figure 5 starts by a phase where both the virtual device asset signature S1VD and the physical asset signature S2H are checked by the authentication means M2. If these signatures S1VD and S2H are successfully authenticated, the gaming experience XPD1 may be allocated to the playing device MC2. The virtual device asset signature S1VD is updated in the player device SC1, the gaming experience XPD1 is removed from the player device SC1 and copied in the player device SC2, a virtual device asset signature S2VD is generated from the gaming experience XPD1 and stored into the player device SC2. The virtual player asset signature S2VD aims at allowing that the gaming experience XPD1 is now allocated to the playing device MC2 which belongs to the player P2.

A gaming experience may also be transferred between two playing devices belonging to a unique player.

**Figure 6** is a flow chart showing another part of a step sequence allowing the transfer of the playing device MC1 and its associated gaming experience XPD1 from player P1 to player P2 according to the invention.

The player P2 is assumed to own the player device SC2.

Coming from the validation step of Figure 2 (via the connecting point "D"), the flow chart of Figure 6 starts by a phase where the physical asset signature S1H and the virtual device asset signature S1VD are checked by the authentication means M2. If these signatures are successfully authenticated, the playing device MC1 and the corresponding gaming experience XPD1 may be allocated to the player P2. The virtual device asset signature S1VD and the physical asset signature S1H are updated in the player device SC1. The gaming experience XPD1 is removed from the player device SC1 and copied in the player device SC2, a virtual device asset signature S2VD is generated from the gaming experience XPD1 and stored into the player device SC2. A physical asset signature S2H is generated in way similar to the signature S1H by the generating means M3. Then the physical asset signature S2H is stored in the player device SC2. The virtual player asset signature S2VD and the physical asset signature S2H allow proving that the playing device MC1 and its associated gaming experience XPD1 are now allocated to the player P2.

## Claims

1. A **method** for managing assets related to a game, a first playing device (MC1) comprising a first authentication data (SM1) which is unique to said first playing device (MC1),
**characterized in that** a first player device (SC1) is allocated to a first player, **in that** a second player device (SC2) is allocated to a second player and **in that** the method comprises the following step:
- authenticating said first authentication data (SM1) and in case of success, generating a first physical asset signature (S1H) reflecting the allocation of said first playing device (MC1) to said first player device (SC1) and storing said first physical asset signature (S1H) in said first player device (SC1).

2. A method according to claim 1, wherein the method comprises the further steps:
- authenticating said first physical asset signature (S1H) and in case of success:
- generating a second physical asset signature (S2H) reflecting the allocation of said first playing device (MC1) to said second player device (SC2),
- storing said second physical asset signature (S2H) in said second player device (SC2), and
- updating said first physical asset signature (S1H) in said first player device (SC1).

3. A method according to claim 1, wherein the game is issued by an editor and wherein the method comprises the further steps:
- playing the game, generating a game record (RD1) associated to said first player device (SC1) and storing the game record (RD1) in said first player device (SC1),
- validating the game record (RD1) by using a server (SV) representing the editor and in case of success, generating a first player experience (XPP1) associated to said first player device (SC1) from the game record (RD1), generating a first virtual player asset signature (S1VP) from said first player experience (XPP1) and storing said first player experience (XPP1) and said first virtual player asset signature (S1VP) in said first player device (SC1).

4. A method according to claim 3, wherein the method comprises the further steps:
- authenticating said first virtual player asset signature (S1VP) and in case of success:
- transferring said first player experience (XPP1) to said second player device (SC2) by generating a second virtual player asset signature (S2VP) from said first player experience (XPP1),
- storing said first player experience (XPP1) and said second virtual player asset signature (S2VP) in said second player device (SC2), and
- updating said first virtual player asset signature (S1VP) in said first player device (SC1).

5. A method according to claim 1, wherein the game is issued by an editor and wherein the method comprises the further steps:
- playing with said first playing device (MC1), generating a game log (LO1) associated to said first playing device (MC1) and storing the game log (LO1) in said first player device (SC1),
- validating the game log (LO1) by using a server (SV) representing the editor and in case of success:
- generating a gaming experience (XPD1) associated to said first playing device (MC1) from the game log (LO1),
- generating a first virtual device asset signature (S1VD) from the gaming experience (XPD1), and
- storing the gaming experience (XPD1) and said first virtual device asset signature (S1VD) in said first player device (SC1).

6. A method according to claim 5, wherein a second playing device (MC2) comprises a second authentication data (SM2) which is unique to said second playing device (MC2), wherein said second player device (SC2) comprises a second physical asset signature (S2H) reflecting the allocation of said second playing device (MC2) to said second player device (SC2) and wherein the method comprises the further steps:
- authenticating said second physical asset signature (S2H) and said first virtual device asset signature (S1VD) and in case of success, allocating the gaming experience (XPD1) to said second playing device (MC2) by:
- generating a second virtual device asset signature (S2VD) from the gaming experience (XPD1),
- storing the gaming experience (XPD1) and said second virtual device asset signature (S2VD) in said second player device (SC2),
- updating said first virtual device asset signature (S1VD) in said first player device (SC1).

7. A method according to claim 5, wherein the method comprises the further steps:
- authenticating said first physical asset signature (S1H) and said first virtual device asset signature (S1VD) and in case of success, allocating said first playing device (MC1) and the gaming experience (XPD1) to said second player device (SC2) by:
- generating a second virtual device asset signature (S2VD) from the gaming experience (XPD1),
- storing the gaming experience (XPD1) and said second virtual device asset signature (S2VD) in said second player device (SC2),
- generating a second physical asset signature (S2H) reflecting the allocation of said first playing device (MC1) to said second player device (SC2),
- storing said second physical asset signature (S2H) into said second player device (SC2),
- updating said first virtual device asset signature (S1VD) and said first physical asset signature (S1H) in said first player device (SC1).

8. A **system** for managing assets related to a game issued by an editor, said system comprising a server (SV) representing the editor and a first playing device (MC1) comprising a first authentication data (SM1) which is unique to said first playing device (MC1),
**characterized in that** the said system comprises a first player device (SC1) allocated to a first player, a second player device (SC2) allocated to a second player, **in that** the system comprises a first authenticating means (M1) adapted to authenticate said first authentication data (SM1) and **in that** the system comprises a generating means (M3) adapted to generate a first physical asset signature (S1H) reflecting the allocation of said first playing device (MC1) to said first player device (SC1) only in case of successful authentication of said first authentication data (SM1).

9. A system according to claim 8, wherein the system comprises a second authenticating means (M2) adapted to authenticate said first physical asset signature (S1H), wherein the system comprises an updating means (M4) adapted to update first physical asset signature (S1H) in case of transfer of said first playing device (MC1) from to said first player device (SC1) to said second player device (SC2), in that first player device (SC1) comprises a recording means (M6) adapted to generate a game record (RD1) associated to said first player device (SC1) when playing the game and adapted to store the game record (RD1) in said first player device (SC1) and in that the system comprises a validating means (M5) adapted to validate the game record (RD1) by using a server (SV) representing the editor and in case of successful validation, to generate a first player experience (XPP1) associated to said first player device (SC1) from the game record (RD1).

10. A system according to claim 9, wherein said first player device (SC1) comprises a logging means (M7) adapted to generate a game log (LO1) associated to said first playing device (MC1) when playing with said first playing device (MC1) and to store the game log (LO1) in said first player device (SC1), and wherein the validating means (M5) is adapted to validate the game log (LO1) by using a server (SV) representing the editor and in case of success to generate a gaming experience (XPD1) associated to said first playing device (MC1) from the game log (L01).
